# EUROPEAN PATENT APPLICATION

(11) **EP 3 623 188 A1**
(43) Date of publication of application: **18.03.2020**
(21) Application number: 19184199.8
(22) Date of filing: 03.07.2019
(51) Int. Cl.: B60J 5/06

(54) **COVER FOR TARPAULIN FASTENING**

(30) Priority: 13.09.2018 PL 42699418
(71) Applicant: "WIELTON" Spolka Akcyjna, 98-300 Wielun (PL)
(72) Inventor: Kaczor, Maciej, Stanislaw, 98-346 Wichernik (PL)
(74) Representative: AOMB Polska Sp. z.o.o.

(57) **Abstract**

The present invention relates to a cover for tarpaulin fastening, which tarpaulin (1) comprises holes for customs fasteners (6), characterized in that it has the form of a longitudinal belt (4), which is attached to the tarpaulin (1) above the customs fasteners (6), wherein the longitudinal belt (4) is made at least partly, in the area of customs fasteners (6), of a transparent material.

## Description

### Technical Field

The invention relates to an additional transparent material belt attached to the side tarpaulin of a semi-trailer with the aim of protecting the vehicle interior of the vehicle against moisture penetration together with decreasing the aerodynamic resistance while simultaneously meeting customs requirements related to the vehicle.

### Background Art

In the prior art, transport trailers are commonly used, which have tarpaulins covering the transported cargo. Often, such trailers are used for cross-border transport of goods, which means that such tarpaulins must meet customs requirements, especially as concerns ensuring the visibility of fasteners and enabling the TIR cable to be threaded through the fasteners.

Unfortunately, in order to meet these requirements, the commonly known fasteners pass through the tarpaulin, thereby creating places through which moisture can penetrate into the transported cargo - especially by migration of water droplets on the tarpaulin as a result of air rush. Moreover, the fasteners protruding from the tarpaulin disturb the air flow around the semi-trailer, resulting in an additional resistance, which consequently increases fuel consumption in transport with semi-trailers with such fasteners.

### Summary of invention

The present invention overcomes the above disadvantages by providing a tarpaulin meeting the customs requirements (visibility of fasteners and threading of the TIR cable through fasteners) as well as better protecting the cargo against moisture and reducing aerodynamic resistance.

The present invention relates to a cover for tarpaulin fastening, which tarpaulin comprises holes for customs fasteners, characterized in that it has the form of a longitudinal belt, which is attached to the tarpaulin above the customs fasteners, wherein the longitudinal belt is made, at least partly, in the area of customs fasteners, of a transparent material.

Preferably, the longitudinal belt is entirely made of a transparent foil.

Preferably, the longitudinal belt is connected to the tarpaulin by a welded, glued, or sewn joint, or by a waterproof zip fastener.

Preferably, the longitudinal belt is attached to the tarpaulin below the customs fasteners using releasable connection means, preferably waterproof zip fasteners, Velcro or magnets.

Preferably, openable and lockable moisture-proof windows are made in the longitudinal belt.

Preferably, the contact surfaces of the tarpaulin and/or the longitudinal belt are coated with a hydrophobic material.

The invention also relates to a tarpaulin of a semi-trailer with a cover for tarpaulin fastening according to the invention.

The object of the invention is also a semi-trailer with tarpaulin having a cover for tarpaulin fastening according to the invention.

The use a transparent belt strip of an appropriate height aims at sealing the vehicle's cargo space and reducing the resistance of the side airflow along the semi-trailer by covering the protruding elements of the customs fastening. This solution is user-friendly as it does not require any additional operations, the same tarpaulin tensioning and fixing fasteners are used here. The transparency of the material used ensures compliance with the visibility requirement of custom fasteners.

### Brief description of drawings

The object of the invention is illustrated in more detail in a preferred embodiment with reference to the accompanying drawing, wherein:

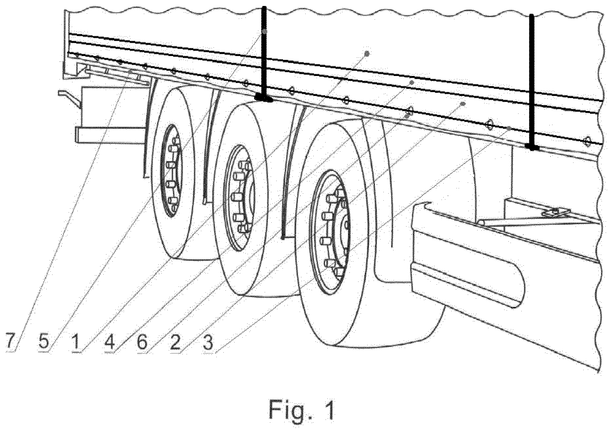

Fig. 1 shows the side of a curtain semi-trailer modified according to the invention.

### Description of embodiments

In a preferred embodiment, the invention is implemented by adding a component to the side of the tarpaulin 1 of a curtain semi-trailer, from the outside. According to the invention, a longitudinal belt 4, made of a transparent material is added, the transparent material being waterproof, in particular of plastic, e.g., in the form of a belt of transparent foil. Optionally, the longitudinal belt 4 can be made partly of a waterproof fabric (natural or synthetic) that would allow a stronger connection to the tarpaulin 1, wherein the fabric would be connected to a part made of a transparent foil in an area that would be located close to the fasteners 6 to allow a visual inspection of the fasteners 6 and the correctness of threading of the TIR cable 3.

The longitudinal belt 4 is attached to the tarpaulin 1 above the area where the customs fasteners 6 pass through the tarpaulin 1, e.g., parallel to the edge of the semi-trailer 7, essentially horizontally.

The longitudinal belt 4 can be attached to the tarpaulin 1 in any known manner which will provide a permanent connection and prevent water penetration through the connection area of the belt 4 and the tarpaulin 1. The longitudinal belt 4 can be attached to the tarpaulin 1 by welding, gluing, it can be fixed by sewing or using additional connecting parts, such as rivets, screws, rigid or flexible clamping bars, etc. (which connection methods would not provide a full moisture blocking and would require an additional sealing agent, e.g., in the form of silicone), or with the use of measures such as waterproof zip fasteners - which would involve the need to connect one part of the zipper/slider to the tarpaulin 1 and the other part to the longitudinal belt 4 (e.g. by welding, gluing, sewing with seam sealing).

Preferably, the longitudinal belt 4 consists of a transparent foil and is connected to the tarpaulin 1 by welding along one of the long sides of the belt 4.

The lower part of the longitudinal belt 4 should also be secured so that the belt 4 effectively protects the transported cargo against moisture, which can be provided in various ways. One option is to provide even longitudinal and vertical tensioning of the cover, which is formed by the longitudinal belt 4, by using standard elements used for tensioning the tarpaulin 1 of the semi-trailer. Then, the lower part of the belt 4 falls down low enough along the tarpaulin 1 that it can be wrapped together with the lower part of the tarpaulin 1 by the edge of the semi-trailer 7 and secured with the use of buckles 5 which are present in the tarpaulin. As a result, a good protection against moisture penetration is achieved, visibility of the customs fastenings locations is ensured and a streamlined covering of the fasteners 6 is obtained, thus reducing the aerodynamic resistance of the semi-trailer.

According to another preferred embodiment, the lower part of the longitudinal belt 4 can be joined to the tarpaulin 1 below the positions of the customs fasteners 6 by, e.g., a waterproof zip fastener. In this case, the lower part of the belt 4 would not have to be wrapped with the lower part of the tarpaulin 1.

Other examples of joining the bottom of the belt 4 with a tarpaulin 1 that would meet the requirements of moisture protection are also possible, e.g., by using magnets/magnetic strips or Velcro fasteners in the longitudinal belt 4 and the tarpaulin 1, which may, however, require to use local points for a more secure attachment (e.g., buttons, snaps, naps, etc.) or even the use of additional sealing between the belt 4 and the tarpaulin 1 (e.g., in the form of rubber gaskets or overlapping silicone bands). Another preferred method to increase the moisture resistance is to use hydrophobic substances, e.g., by coating parts of the longitudinal belt 4 or the tarpaulin 1 with a hydrophobic layer (e.g., in the contact area of the lower part of the longitudinal belt 4 with the tarpaulin 1).

In another preferred embodiment of the invention, the longitudinal belt 4 may not be made of a substantially continuous and uninterrupted piece of material, but may have "windows" that would allow a fragment of the longitudinal belt 4 to be moved away (e.g., to check manually a particular place, where the TIR cable is threaded or to check the status of the fastening elements 6). Such "windows" can be made in any way, preferably by using waterproof zip fasteners along the edges of the "window".

The cover, obtained by using an additional belt, which is at least partly transparent, matches the objectives described earlier and is suitable for use in existing tarpaulin semi-trailers, without the need for significant interference with the semi-trailer, tarpaulin, etc. - a person skilled in the art would be able to choose an appropriate method of joining the longitudinal belt with the tarpaulin without damaging it.

### Reference signs list

1 - tarpaulin
2 - transparent part of the longitudinal belt
3 - TIR cable
4 - longitudinal belt
5 - buckles
6 - customs fasteners
7 - semi-trailer edge

## Claims

1. A cover for tarpaulin fastening, which tarpaulin (1) comprises holes for customs fasteners (6), **characterized in that** it has the form of a longitudinal belt (4), which is attached to the tarpaulin (1) above the customs fasteners (6), wherein the longitudinal belt (4) is made at least partly, in the area of customs fasteners (6), of a transparent material.

2. The cover for tarpaulin fastening according to claim 1, **wherein** the longitudinal belt (4) is entirely made of a transparent foil.

3. The cover for tarpaulin fastening according to claim 1, **wherein** the longitudinal belt (4) is connected to the tarpaulin (1) by a welded, glued, or sewn joint, or by a waterproof zip fastener.

4. The cover for tarpaulin fastening according to claim 1, 2, or 3, **wherein** the longitudinal belt (4) is attached to the tarpaulin (1) below the customs fasteners (6) using releasable connection means, preferably waterproof zip fasteners, Velcro or magnets.

5. The cover for tarpaulin fastening according to claim 1, 2, 3, or 4, **wherein** openable and lockable moisture-proof windows are made in the longitudinal belt (4).

6. The cover for tarpaulin fastening according to claim 1, 2, 3, 4, or 5, **wherein** the contact surfaces of the tarpaulin (1) and/or the longitudinal belt (4) are coated with a hydrophobic material.

7. A semi-trailer tarpaulin with a cover for tarpaulin fastening according to any claim 1, 2, 3, 4, 5, or 6.

8. A semi-trailer with a tarpaulin having a cover for tarpaulin fastening according to any claim 1, 2, 3, 4, 5, or 6.
